# EUROPÄISCHE PATENTANMELDUNG

(11) **EP 1 455 546 A1**
(43) Veröffentlichungstag der Anmeldung: **08.09.2004**
(21) Anmeldenummer: 03004439.0
(22) Anmeldetag: 27.02.2003
(51) Int. Cl.: H04Q 7/38, H04Q 7/22

(54) **Aushandeln von Bedingungen für eine Verbindung in einem mobilen Kommunikationsnetz**

(71) Anmelder: SIEMENS AKTIENGESELLSCHAFT, 80333 München (DE)
(72) Erfinder: Eslami, Abdollah, 1140 Wien (AT); Memar, Mohammad Ali, Dr., 1190 Wien (AT)

(57) **Zusammenfassung**

Eine einfache und effiziente Möglichkeit zum Aushandeln von Bedingungen für eine Verbindung wird beschrieben durch das Verfahren und die Vorrichtung zum Aushandeln von mindestens einer Bedingung betreffend die Mobilfunkendgerät-seitige Akzeptanz einer Verbindung bei einer Verbindungs-Aufbau-Anfrage zwischen einem Mobilfunkendgerät und einem weiteren Gerät in einem mobilen Kommunikationsnetz, dadurch gekennzeichnet, dass ein Mobilfunkendgerät bei einer Verbindungs-Aufbau-Anfrage mit einem weiteren Gerät mindestens eine Bedingung für eine Verbindung aushandelt, dass nur bei Vorliegen der Akzeptanz des Mobilfunkendgerätes der mindestens einen ausgehandelten Bedingung für die Verbindung die Verbindung zum Mobilfunkendgerät aufgebaut wird, dass ein Applikations-Server das Ergebnis des Aushandelns an weitere Netzknoten zur weiteren Bearbeitung weiterleitet.

## Beschreibung

Die Erfindung betrifft ein Verfahren und eine Vorrichtung zum Aushandeln von mindestens einer Bedingung betreffend die Mobilfunkendgerät-seitige Akzeptanz einer Verbindung bei einer Verbindungs-Aufbau-Anfrage zwischen einem Mobilfunkendgerät und einem weiteren Gerät in einem mobilen Kommunikationsnetz.

Derzeit gibt es verschiedene Verrechnungs-Modelle für die Benutzung von Multimedia-Applikationen (MMA). Bei den meisten dieser Modelle muss der Benutzer dieser Dienste, wie etwa dem Herunterladen von Bildern, Videosequenzen, Tönen oder Ähnlichem die Kosten für die erhaltenen Daten tragen, unabhängig davon, ob er den Dienst selbst initiiert hat oder nicht. Der Benutzer eines Mobilfunkendgerätes hat keine Möglichkeit flexibel zu entscheiden, wie hoch der Anteil der Kostenübernahme bei einem Gespräch, der Inanspruchnahme von Multimedia-Applikationen etc. sein soll. Weiterhin kann er keine Bedingungen für den Erhalt von Diensten stellen. Solche Bedingungen können die Datenmenge, die Inanspruchnahme-Zeit des Dienstes etc. sein. Bestenfalls kann ein Benutzer eines Mobilfunkendgerätes eine Verbindungs-Aufbau-Anfrage für einen Dienst ablehnen, wenn er z. B. nicht bereit ist die Kosten zu übernehmen.

Aufgabe der vorliegenden Erfindung ist es deshalb, dem Benutzer eines Mobilfunkendgerätes eine einfache und effiziente Möglichkeit zum Stellen von Bedingungen für das Zustandekommen einer Verbindung zu geben.

Die Aufgabe wird erfindungsgemäß durch die Gegenstände der unabhängigen Patentansprüche bezüglich des Verfahrens und der Vorrichtung gelöst. Weiterbildungen der Erfindung sind in den Unteransprüchen angegeben. Kern der Erfindung ist, dass bei einer Verbindungs-Aufbau-Anfrage zwischen einem Mobilfunkendgerät und einem weiteren Gerät in einem mobilen Kommunikationsnetz mindestens eine Bedingung für das Zustandekommen einer Verbindung ausgehandelt wird. Vorteil der Erfindung ist, dass die Verbindung nur dann aufgebaut wird, wenn das Ergebnis des Aushandelns vom Benutzer des Mobilfunkendgerätes akzeptiert wird. Dadurch hat der Benutzer eines Mobilfunkendgerätes die Möglichkeit Dienste, die er z. B. aus Kostengründen nicht in Anspruch nehmen möchte, abzulehnen. Weiterhin stellt die vorgestellte Lösung eine sehr einfache und kosteneffektive Möglichkeit dar, das Aushandeln der Kostenübernahme für einen Dienst, wie z. B. ein Gespräch, das Herunterladen von Videosequenzen, Bildern, Tönen etc. zwischen einem Benutzer eines Mobilfunkendgerätes und einem weiteren Gerät in einem mobilen Kommunikationsnetz bereitzustellen. Ein weiteres Gerät kann ein Mobilfunkendgerät, ein Applikations-Server, ein mobiler oder stationärer Computer, ein Handheld-Gerät, eine Feststation oder ähnliches sein.

Die Erfindung wird anhand eines in den Figuren dargestellten Ausführungsbeispiels näher erläutert. Im Einzelnen zeigen
- Figur 1: das Aushandeln einer zumindest teilweisen Kostenübernahme zwischen zwei Mobilfunkendgeräten - Teil 1
- Figur 2: das Aushandeln einer zumindest teilweisen Kostenübernahme zwischen zwei Mobilfunkendgeräten - Teil 2

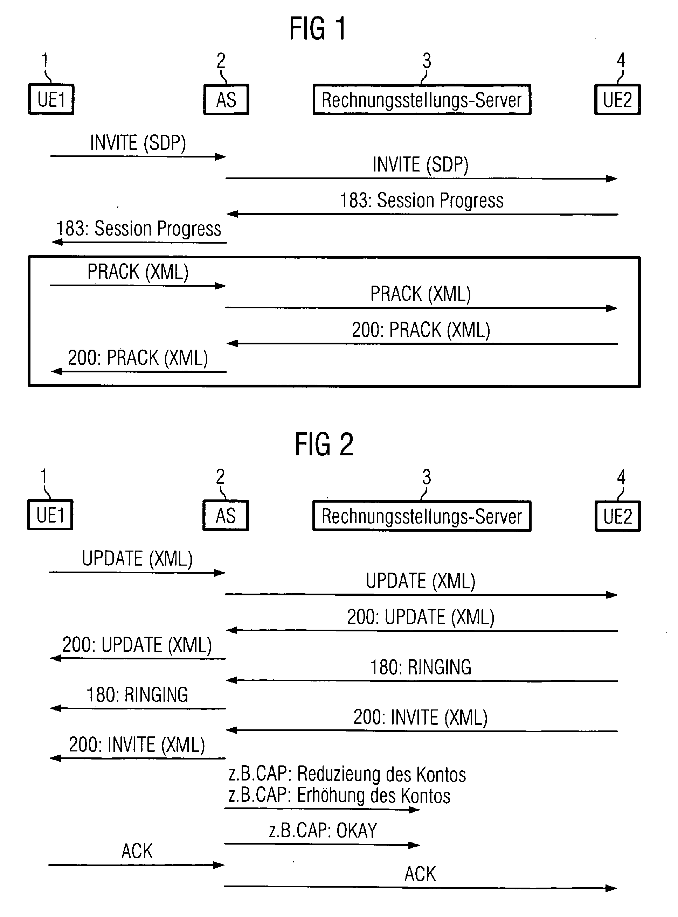

Figur 1 zeigt, wie ein Mobilfunkendgerät 1, das eine Verbindungs-Aufbau-Anfrage für ein Gespräch von einem weiteren Mobilfunkendgerät 4 erhält, mit dem weiteren Mobilfunkendgerät 4 die zumindest teilweise Kostenübernahme mit Hilfe von SIP-Nachrichten (Session Initiation Protocol) aushandelt. Auch andere Protokolle für das Aushandeln mindestens einer Bedingungen, wie z. B. Internet-Protokolle (HTTP, SOAP, FTP, Telnet, etc.) sind vorstellbar, genauso wie Text-Nachrichten oder XML. Es könnte z. B. ein Mobilfunkendgerät 1 eine Text-Nachricht erhalten mit dem Inhalt, dass wenn eine angegebene Rufnummer zurückgerufen wird und dort z. B. 30 Sekunden Werbung angehört wird, eine Gutschrift für den Benutzer des Mobilfunkendgerätes 1 über einen bestimmten Geldbetrag ausgestellt wird. Das Mobilfunkendgerät 1 sendet dem weiteren Mobilfunkendgerät 4 eine SIP-Einladungsnachricht (SIP-Message: INVITE: Invitation to a session) für das Aushandeln der Bedingungen an einen Applikations-Server 2. Der Applikations-Server 2 leitet die SIP-Einladungsnachricht an das weitere Mobilfunkendgerät 1 weiter und beobachtet das Aushandeln zwischen den beiden Mobilfunkendgeräten (1, 4). Wenn der Applikations-Server 2 von einem der beiden Mobilfunkendgeräte 1, 4 zu einer Aktivität aufgefordert wird, wie z. B. zum Abbuchen eines bestimmten Betrages, und das andere der beiden Mobilfunkendgeräte 1, 4 akzeptiert dies, benachrichtigt der Applikations-Server 2 z. B. einen Rechnungsstellungs-Server 3. Nach Erhalt der Einladungs-Nachricht sendet das weitere Mobilfunkendgerät 4 die SIP-Durchführungsnachricht (SIP-Message: 183: Session Progress) an den Applikations-Server 2 zurück und dieser (2) leitet die SIP-Durchführungsnachricht an das Mobilfunkendgerät 1 weiter. Das Aushandeln mindestens einer Bedingung beginnt mit dem Senden der einstweiligen SIP-Bestätigungs-Nachricht (SIP-Message: PRACK: Provisional Acknowledgement), z. B. mit Hilfe von XML wieder über den Applikations-Server 2 an ein weiteres Mobilfunkendgerät 4. Das weitere Mobilfunkendgerät 4 sendet eine positive Antwort mit einer SIP-Akzeptanz-Nachricht (SIP-Message: 200: Okay) über den Applikations-Server 2 an das Mobilfunkendgerät 1. Eine weitere Möglichkeit für das Aushandeln von Konditionen für eine Verbindung

könnte sein, dass ein Nutzer eines Mobilfunkendgerätes 1 in einem Kommunikationsnetz mit einem IP Multimedia Subsystem (IMS) sein Präsenz-Profil derart konfiguriert, dass er für andere Geräte, wie Mobilfunkendgeräte 4, Festnetzendgerät, Applikations-Server etc. nur dann erreichbar ist, wenn diese seine Bedingungen bezüglich der Kostenübernahme akzeptieren. In dem Präsenz-Profil eines Nutzers eines Mobilfunkendgerätes könnten so die Konditionen für eine ganze oder teilweise Kostenübernahme einer Verbindung eingetragen werden und in einem Präsenz-Server hinterlegt werden. Erhält ein S-CSCF (Serving Call State Control Function) bzw. Applikations-Server 2 eine Verbindungsaufbauanfrage von einem anderen Gerät, so überprüft der S-CSCF bzw. Applikations-Server 2 das Präsenz-Profil des angewählten Mobilfunkendgerätes 1 in einem Präsenz-Server. Das andere Gerät wird darüber informiert, dass der Nutzer des Mobilfunkendgerätes 1 Bedingungen für die Kostenübernahme in seinem Präsenz-Profil konfiguriert hat. Die Information kann in Form eines Audio-Signals, visueller bzw. audio-visueller Signale oder Ähnliches geschehen. Die Verbindung wird aufgebaut, wenn die Konditionen im Präsenz-Profil von dem anderen Gerät akzeptiert werden.

Figur 2 zeigt die Fortsetzung des Aushandelns mindestens einer Bedingung zur Kostenübernahme zwischen zwei Mobilfunkendgeräten 1, 4. Nach Erhalt der SIP-Akzeptanz-Nachricht (SIP-Message: 200: Okay) sendet das Mobilfunkendgerät die SIP-Aktualisierungs-Nachricht (SIP-Message: UPDATE) für eine Bedingung bzw. zur näheren Definition der Bedingung über einen Applikations-Server 2 an das weitere Mobilfunkendgerät 4. In dem Ausführungsbeispiel wird der Anteil der Kostenübernahme als Bedingung ausgehandelt. Selbstverständlich sind weitere Bedingungen, wie die Datenmenge, die Inanspruchnahme-Zeit des Dienstes etc. vorstellbar. Das weitere Mobilfunkendgerät 4 sendet bei Akzeptanz der Bedingung über den Applikations-Server 2 die SIP-Akzeptanz-Nachricht für die Aktualisierung der Bedingungen (SIP-Message: 200: Okay (UPDATE)) an das Mobilfunkendgerät 1. Danach sendet das weitere Mobilfunkendgerät 4 die SIP-Nachrichten Anruf (SIP-Message: 180: Ringing) und Einladung (SIP-Message: INVITE: Invitation to a session) über den Applikations-Server 2 an das Mobilfunkendgerät 1. Der Applikationsserver 2 sendet aufgrund der Nachrichten eine INAP-CAP-Nachricht: Kostenbelastung auf das Konto (Decrease-Account) oder je nach Aushandel-Ergebnis eine INAP-CAP-Nachricht: Gutschrift auf das Konto (Increase-Account) an einen Rechnungsstellungs-Server 3. Der Rechnungsstellungs-Server 3 antwortet dem Applikations-Server 2 mit einer INAP-CAP-Nachricht: OKAY (Akzeptanz). Schließlich sendet das Mobilfunkendgerät 1 über den Applikations-Server 2 eine SIP-Bestätigungs-Nachricht (SIP-Message: ACK: Acknowledgement) an das weitere Mobilfunkendgerät 4 und damit wird die Verbindung aufgebaut. Diese Lösung kann auch verwendet werden, wenn das weitere Gerät ein Applikations-Server, eine Feststation, ein Handheld-Gerät, ein mobiler oder stationärer Computer oder Ähnliches ist.

## Patentansprüche

1. Verfahren zum Aushandeln von mindestens einer Bedingung betreffend die Mobilfunkendgerät-seitige Akzeptanz einer Verbindung bei einer Verbindungs-Aufbau-Anfrage zwischen einem Mobilfunkendgerät (1) und einem weiteren Gerät (4) in einem mobilen Kommunikationsnetz,
**dadurch gekennzeichnet,**
**dass** ein Mobilfunkendgerät (1) bei einer Verbindungs-Aufbau-Anfrage mit einem weiteren Gerät (4) mindestens eine Bedingung für eine Verbindung aushandelt,
**dass** nur bei Vorliegen der Akzeptanz des Mobilfunkendgerätes (1) der mindestens einen ausgehandelten Bedingung für die Verbindung die Verbindung zum Mobilfunkendgerät (1) aufgebaut wird,
**dass** ein Applikations-Server (2) das Ergebnis des Aushandelns an weitere Netzknoten zur weiteren Bearbeitung weiterleitet.

2. Verfahren nach Anspruch 1,
**dadurch gekennzeichnet,**
**dass** die anfallenden Kosten, die Größe der Daten und/oder der Datentyp der Verbindung vom Mobilfunkendgerät (1) mit einem weiteren Gerät (4) als Bedingung für den Aufbau einer Verbindung ausgehandelt werden.

3. Verfahren nach einem der vorhergehenden Ansprüche,
**dadurch gekennzeichnet,**
**dass** das Aushandeln mindestens einer Bedingung über ein Session Initiation Protocol (SIP) realisiert wird.

4. Verfahren nach einem der vorhergehenden Ansprüche,
**dadurch gekennzeichnet,**
**dass** das Aushandeln mindestens einer Bedingung über ein H.323 Protokoll realisiert wird.

5. Verfahren nach einem der vorhergehenden Ansprüche,
**dadurch gekennzeichnet,**
**dass** das Aushandeln mindestens einer Bedingung über mindestens eine Text enthaltende Nachricht realisiert wird.

6. Verfahren nach einem der vorhergehenden Ansprüche,
**dadurch gekennzeichnet,**
**dass** das Aushandeln mindestens einer Bedingung über ein Internet-Protokoll realisiert wird.

7. Verfahren nach Anspruch 6,
**dadurch gekennzeichnet,**
**dass** als Internet-Protokoll HTTP, FTP, SOAP oder Telnet verwendet werden.

8. Verfahren nach einem der vorhergehenden Ansprüche,
**dadurch gekennzeichnet,**
**dass** das Aushandeln mindestens einer Bedingung über XML erfolgt.

9. Verfahren nach einem der vorhergehenden Ansprüche,
**dadurch gekennzeichnet,**
**dass** ein weiterer Netzknoten ein Rechnungsstellungs-Server (3) ist.

10. Verfahren nach Anspruch 9,
**dadurch gekennzeichnet,**
**dass** die anfallenden Kosten für eine Verbindung an einen Rechnungsstellungs-Server (3) über ein CAMEL-Applikations-Protokoll übermittelt werden.

11. Verfahren nach einem der vorhergehenden Ansprüche,
**dadurch gekennzeichnet,**
**dass** ein weiterer Netzknoten ein Applikations-Server (2) ist.

12. Verfahren nach einem der vorhergehenden Ansprüche,
**dadurch gekennzeichnet,**
**dass** das Mobilfunkendgerät (1) eine Verbindungs-Aufbau-Anfrage für ein Gespräch, das Herunterladen von Spielen, Bildern,
Videosequenzen, Tönen, Internetseiten, Applikationen oder weiterer Dienste erhält.

13. Verfahren nach einem der vorhergehenden Ansprüche,
**dadurch gekennzeichnet,**
**dass** ein weiteres Gerät (4) ein Mobilfunkendgerät, eine Feststation oder ein Applikationsserver ist.

14. Verfahren nach einem der vorhergehenden Ansprüche,
**dadurch gekennzeichnet,**
**dass** ein Nutzer eines Mobilfunkendgerätes (1) mindestens eine Bedingung betreffend die Kostenübernahme in ein Präsenz-Profil einträgt.

15. Verfahren nach Anspruch 14,
**dadurch gekennzeichnet,**
**dass** das Präsenz-Profil in einem Präsenz-Server gespeichert wird.

16. Vorrichtung zum Aushandeln von mindestens einer Bedingung betreffend die Mobilfunkendgerät-seitige Akzeptanz einer Verbindung bei einer Verbindungs-Aufbau-Anfrage zwischen einem Mobilfunkendgerät (1) und einem weiteren Gerät (4) in einem mobilen Kommunikationsnetz,
- mit einer Empfangseinrichtung zum Empfang von einer Verbindungs-Aufbau-Anfrage und ein Ergebnis des Aushandelns einer Bedingung für eine Verbindung,
- mit einer Einrichtung zum Aushandeln von mindestens einer Bedingung für den Aufbau einer Verbindung und
- mit einer Einrichtung zum Senden bei Akzeptanz des Ergebnisses des Aushandelns und zum Senden von mindestens ein Teil-Ergebnis und ein Ergebnis des Aushandelns an weitere Netzknoten.
